# EUROPEAN PATENT SPECIFICATION

(11) **EP 1 329 814 B1**
(45) Date of publication and mention of the grant of the patent: **14.06.2006**
(21) Application number: 02001458.5
(22) Date of filing: 21.01.2002
(51) Int. Cl.: G06F 13/40, B60R 11/02

(54) **An interactive multi-user multimedia system for vehicle application, a multimedia center subsystem and a motor vehicle operable with such multimedia system**
Interaktives Mehrbenutzer-Multimedia-System für Kraftfahrzeuganwendung, Multimediazentrumuntersystem und Kraftfahrzeug mit solchem Multimediasystem
Système multimedia interactif multi-utilisateur pour application sur véhicule, sous-système central multimedia et véhicule automobile pouvant fonctionner avec un tel système multimedia

(43) Date of publication of application: 23.07.2003
(73) Proprietor: SIEMENS AKTIENGESELLSCHAFT, 80333 München (DE)
(72) Inventor: Gruss, Heiko, 35260 Stadtallendorf (DE); Tröll, Joachim, Dr., 35415 Pohlheim (DE)

(56) References cited:
- DE-A- 10 024 007
- DE-A- 19 939 631
- US-A1- 2001 044 664

## Description

An interactive multi-user multimedia system for vehicle application, a multimedia center subsystem and a motor vehicle operable with such multimedia system

The invention relates to an interactive multimedia system for multi-user application in a motor vehicle featuring a multimedia center subsystem. More in particular, the invention relates to a system that accommodates processing means for running various computer-oriented processing applications and that is.arranged for interfacing to:
(a) receiving means that are arranged for receiving various image information and/or other signal streams and
(b) distributed visual representation facilities that are arranged for representing respective personal images on the basis of said signal streams and/or information received from one or more other sources by said multimedia center, through providing of a video multiplexing facility.

Without implied or express limitation, such multimedia system could allow a driver and other persons present in the vehicle to listen to radio broadcast or audio replay devices, view television broadcast or a DVD program, consult data regarding the motor vehicle itself or regarding past or future routes of the vehicle, play games, or perform communication operations viz à viz an external environment. Now although in principle most or all of such functions could be fulfilled by various dedicated devices, the inventors have recognized that the providing of a single and comprehensive multi-media system could allow to share the various facilities that are present amongst a plurality of separate terminals, which thereby could decrease the overall price-performance ratio. In particular, a principal such terminal could be integrated in the main control panel, whereas one or more other or secondary terminals would be facing the various rear seats of the vehicle.

Now, the inventors have furthermore recognized that advantageously, the various terminals should be enabled to run separate applications that were independent from each other. In fact, the central subsystem could contain a video multiplexer, so that every video source that generally would be external to the central subsystem or CAR PC could be feeding independently any of the various video monitors. On another level, the CAR PC itself would then present a VGA or similar output to such video multiplexer. However, due to hardware limitations the number of VGA outputs is generally relatively lower than the number of terminals. Quite frequently, there is only one VGA graphic unit. So the system only can realise one VGA Signal and consequently, only a single such output is present.

In consequence, whereas Internet, FAX, and EMAIL facilities would be provided by the CAR PC itself, at any particular instant only one of the stations could receive the control screens of such valuable applications.

A prime requirement for the overall system would be that at any time a particular user terminal should be able to present a visual selection menu to allow a user to select a video source. However, such selection menu can only be presented by the CAR PC itself. The problem is now that in case a first user is running a CAR PC application that requires the presentation of a video image, such as an Internet browser, the other user(s) may not get a selection menu, because the CAR PC may present only a single video image at a time. However, even then, another terminal should be able to activate a video selection, without interrupting a currently running video-based PC application. Preferably then, the selection should proceed on the basis of a menu.

It should be furthermore understood that the present situation is typical for a motor vehicle, in distinction from various other environments, wherein generally, a much wider range of system configurations would be feasible. In particular, the vehicle facilities are generally fixed, the processing is centralized, and the price/performance ratio must be low.

DE 199 39 631 A1 discloses a multimedia unit comprising a control panel, which is detachable in order to ensure projection against theft of the multimedia unit. The control panel comprises a touch screen, which is designed for serving as input for user inputs and also as a display for displaying a status of a telephone, a radio, a television, or a navigation system.

In consequence, amongst other things, it is an object of the present invention to allow the presentation of a video selection facility, independently of any currently running PC CAR application that involves the presentation of a video image.

Now, therefore, an interactive multimedia system for multi-user application in a motor vehicle featuring a multimedia center subsystem according to the invention is characterized by visual imaging means for on at least a first such visual representation facility displaying a signalization item for indicating with respect to at least one other such visual representation facility than said first one identifying the source and/or application in question that is active with respect to such other visual representation facility, wherein said subsystem is arranged for allowing user-selection among a set of said sources/applications for activation said first visual representation facility, whilst substantially continuing any actual and functional displaying regardless of the displaying of said signalization item.

A preferred embodiment of an interactive multimedia system according to the invention is characterized in that the number of said visual representation facilities is higher than the number of image output channels from said processing means.

Another embodiment of an interactive multimedia system according to the invention is characterized in that said system is arranged for displaying on at least one of said visual representation facilities a respective said signalization item with respect to all of said other visual representation facilities.

An alternative embodiment of an interactive multimedia system according to the invention is characterized in that said system is arranged for displaying on at least one of said visual representation facilities a respective said signalization item with respect to all of said visual representation facilities.

Another alternative embodiment of an interactive multimedia system according to the invention is characterized in that said system is arranged for displaying on various ones of said visual representation facilities a respective said signalization item with respect to all of said other visual representation facilities.

Yet another embodiment of an interactive multimedia system according to the invention is characterized in that said system is arranged for displaying on various ones of said visual representation facilities a respective said signalization item with respect to all of said visual representation facilities.

Preferably, said other embodiment of an interactive multimedia system according to the invention is characterized in that said signalization items have identical configurations for all of said visual representation facilities, on which they are actually being displayed.

A further preferred embodiment of an interactive multimedia system according to the invention is characterized in that said configuration is formed as a vertical or horizontal display bar.

Such embodiment of an interactive multimedia system according to the invention may preferably be characterized in that all currently active sources are arranged in a virtual steppable chain.

An embodiment of an interactive multimedia system according to the invention may be characterized in that said chain is a closed chain that is bi-directionally steppable.

The invention also relates to a multimedia subsystem being arranged for use in the above interactive multimedia system, and to a motor vehicle provided with such interactive multimedia system, or provided with a multimedia center subsystem being arranged for use in such interactive multimedia system. Further advantageous aspects of the invention are recited in dependent Claims.

According to a further aspect of the invention an interactive multimedia system for multi-ussr application in a motor vehicle is provided featuring a multimedia center subsystem that accommodates processing means for running various computer-oriented processing applications and that is arranged for interfacing to
(a) receiving means that are arranged for receiving various image information and/or other signal streams;
(b) distributed visual representation facilities that are arranged for representing respective personal images on the basis of said signal streams and/or information received from one or more other sources by said multimedia center, through providing of a video multiplexing facility. The processing means are arranged for generating a visual signalization item menu for on at least a first such visual representation facility indicating a signalization item that identifies the source and/or application being active with respect to that representation facility as a partial and substantially unobstructing content of a currently generated display screen, for allowing under control of menu selection stepping to another source and/or application for said first representation facility to become active upon termination of said stepping.

These and further aspects and advantages of the invention will be discussed more in detail hereinafter with reference to the disclosure of preferred embodiments, and in particular with reference to the appended Figures that show:
- Figure 1,: an overall diagram of an interactive multimedia system for multi-user application in a motor vehicle;
- Figure 1a,: a diagram of a video multiplexer for use in the present embodiment;
- Figure 2,: a first exemplary display image that features an operational Activity Bar displayed;
- Figure 3,: a second exemplary display image that features an operational Activity Bar displayed;
- Figure 4,: a flow chart illustrating the operation regarding the Activity Bars illustrated in Figures 2 and 3.
- Figure 5,: another flow chart illustrating the operation regarding the activity bars illustrated in Figures 2 and 3.

The activity bar to be more fully described hereinafter solves the problems identified supra. In the preferred embodiment, this means that each of the various users will by actuating of a particular Entertainment Key on the remote control device temporarily call up a video selection menu or Activity Bar. The Activity Bar is generated by the CAR PC. In the preferred embodiment it is inserted at the lower, upper, or side edge of the actually running CAR PC application that generates the actual image, and it will effectively cover only a relatively small display area. The Activity Bar allows the user that is currently running the CAR PC application to almost unimpededly continuing therewith. In the embodiment, the Activity Bar has three fields that indicate the various active image sources of each of the associated users. Through actuating the remote control keys, the local video source may be selected. Through this feature, each user may independently select among the video sources, while even a plurality of users may simultaneously use the same video source. Generally, this will not apply to the VGA source, inasmuch as the interactive use thereof is limited to a single display, whereas would be able only to show the output of the VGA facility. Certain applications, such as the navigation application, may even be monopolized to be usable by only a single display, in this case the driver's.

The following is an extended embodiment description of the switching amongst the video and audio sources, and of the RC5 code during actual usage. Actuation of the key ENTERTAIN will switch the user station in question over to the state DEVICE SELECTION. The monitor in question will thereupon switch over to the MC5400 multimedia center subsystem. The Activity Bar is inserted at the left hand edge of the image, showing the actual assigning of the three displays to the various video sources. Through selectively actuating the keys UP and DOWN of the remote control device, each "workstation" or display may progressively select one of the various video sources that are listed hereinafter, for subsequently intended use of such video source. The sequence of these video sources constitutes a virtual endless chain, that may be stepped along in both directions. Video sources that are absent or inoperative will be removed from the chain through recurrent polling of all these video sources by an appropriate master. The overall polling cycle duration may be in the order of one second.

Likewise, reactivated video sources will through polling be reinstalled on the chain at their standard ranking position. User actuation of the OK key on the remote control device will switch over to the video source currently selected, and will extinguish the Activity Bar. The selection is subject to the requirement that another user may not be interfered with. If nevertheless such interference would effectively occur, an error message is displayed, and the Activity Bar maintained. Furthermore, the Activity Bar extinguishes if none of the keys ENTERTAIN, UP, DOWN, OK, is actuated within a time-out interval of some 5 seconds. Actuating of the key ENTERTAIN causes closing of the Activity Bar, inasfar as no other Workstation had called up the Activity Bar: the activations by the displays are ORED in this respect. After closing of the Activity Bar, the display in question remains connected to the video source that was set previously.

If a particular workstation is in standby, any key actuation therefor will switch over to displaying the Activity Bar. For the driver person station, the settings for the System Conditions AS1 will apply.

The following Video Sources are relevant in an exemplary operating environment:
- Navigation
- Television
- Rear View Camera
- AUX1 (DVD, Play Station, etc.)
- AUX2 (DVD, Play Station, etc.)
- Standby
- MC5400

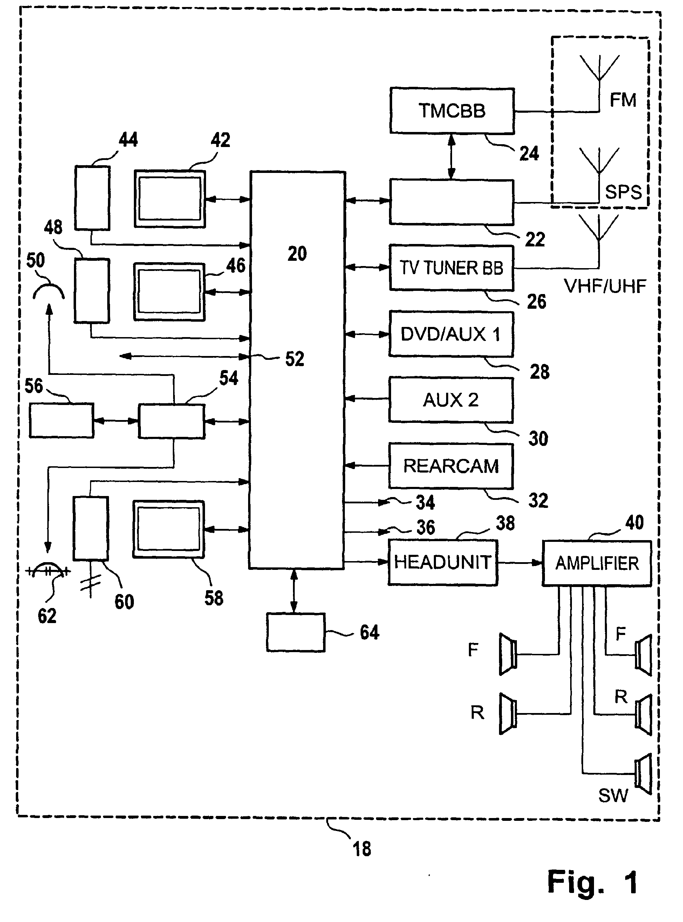

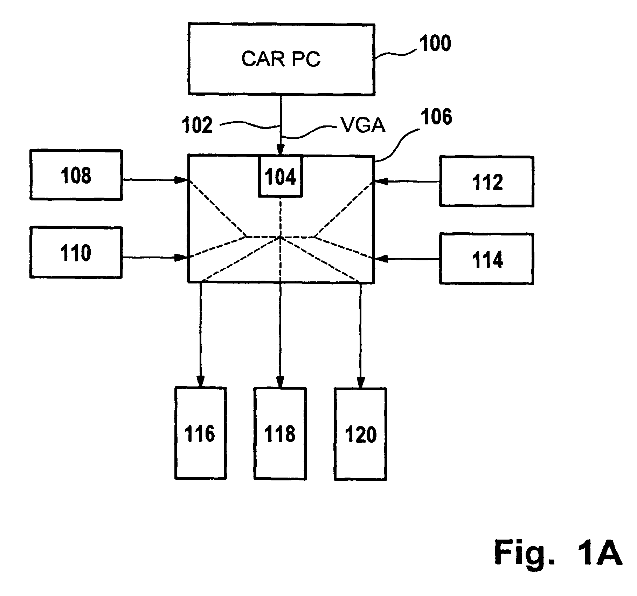

Figure 1 illustrates an overall block diagram of an interactive multimedia system for multi-user application in a motor vehicle. For brevity, the latter has only been indicated by a rectangle 18 drawn in interrupted lines. Now, the central element of the Figure is the Multimedia Center 20 MC 5400 that interfaces to the various other blocks recited hereinafter. In particular, a first part of the operation constitutes a Multi-media Main Task Field. Moreover, the multimedia center is arranged for executing various functions that by themselves have been implemented in personal computers for general usage, in particular, RC5 signal transfer, E-mail, Fax transmission and reception, and interfacing to Internet, the above functionalities collectively constituting a Communication Main Task Field. Furthermore, the system allows interfacing to various categories of computer games.

Regarding the environment of the multimedia center subsystem, the following numbered blocks have been implemented, although the recitation hereinafter implies neither a minimum nor a maximum configuration. As such, the various subsystems are fulfilling the following functions:
- 22:: communicating RGB video, audio, and an RC5 protocol.
In particular, block 22 operates as a multiplexing facility amongst one or more FM channels via TMCBB block 24, and to a GPS organization for effecting vehicle localization and/or guidance which has not been discussed further for brevity.
- 26:: communicating CVBS, two audio channels and an RC5 protocol, that collectively interface to TV tuner BB and to one or more VHF/UHF broadcast channels; as discussed elsewhere, a prime application is where only a single TV channel is active at a time.
- 28:: communicating CVBS, two audio channels and an RC5 protocol, that collectively interface to DVD player or a first **AUX**iliary facility.
- 30: communicating CVBS and two audio channels, that collectively interface to a second **AUX**iliary facility not shown in particular.
- 32:: communicating CVBS such as for interfacing to a rear view camera or other external camera.
- 34, 36:: two further line-out facilities not detailed in particular for brevity.
- 38:: a first line-out facility for interfacing to a headphone unit provided with DSP and feeding an amplifier facility 40 which powers two front loudspeakers F, two rear loudspeakers R, and furthermore a subwoofer loudspeaker SW.
- 42:: communicating RGB, CVBS, Audio, and an RC5 protocol for collectively interfacing to a front panel display facility SY409/MM15000.
- 44:: communicating an RC5/1 protocol from a remote control device.
- 46:: communicating RGB, CVBS, Audio, and an RC5 protocol for interfacing to a first rear seat display facility.
- 48:: communicating an RC5/2 protocol from a remote control device associated to communication item 46.
- 50:: headphone associated to communication items 46, 48.
- 52:: communicating an IRDA protocol.
- 54:: communicating mouse, keyboard and four audio channel signals for collectively interfacing to a rear seat terminal which feeds audio signals to respective headphone sets 50 and 56, and which furthermore receives signals from mouse/keyboard facility 56.
- 58:: communicating RGB, CVBS, Audio, and an RC5 protocol for collectively interfacing to a second rear seat display facility.
- 60:: communicating an RC5/2 protocol from a remote control device.
- 62:: headphone associated to items 58, 60.
- 64:: communicating an RS232 protocol, for interfacing to a Hands Free Control Kit, not further detailed for brevity.

Figure 1a illustrates a diagram of a video multiplexer for use in the present embodiment. As shown, there are four source devices for video signals 108, 110, 112, 114, which signals may in principle be analog or digital video. Furthermore, CAR PC subsystem 100 has an output facility for outputting a single VGA signal on line 102. Through converter mechanism 104 this signal is converted for display. The multiplexer 106 receives the various video signals and through standard switching mechanisms may provide these to any of three video destinations 116, 118, 120. The providing may be subject to various restrictions with respect to a restriction of the eligible subset of displays as set out earlier.

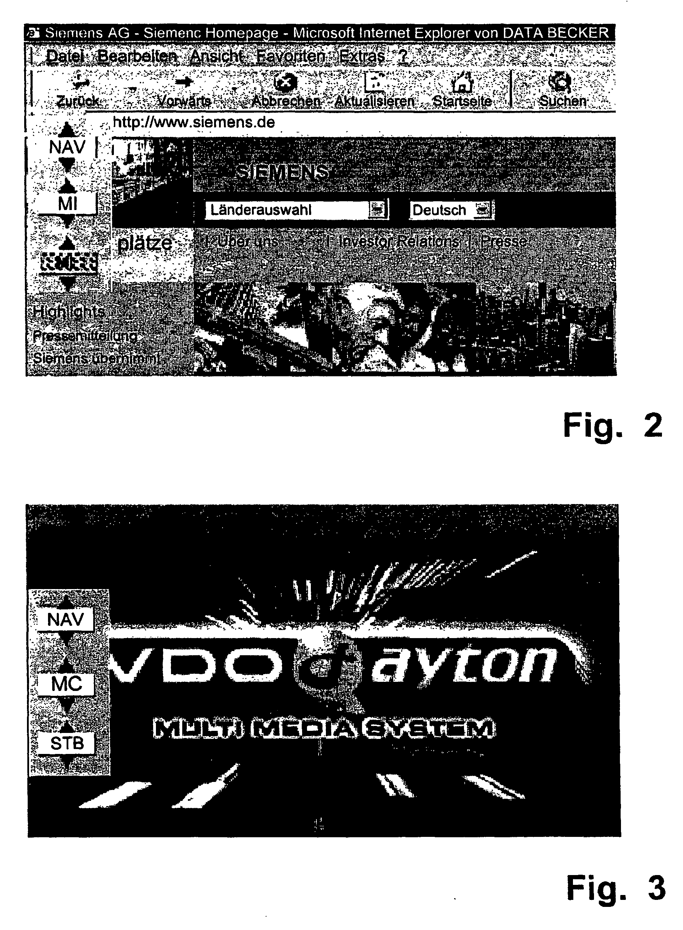

Figure 2 illustrates a first exemplary display image that features an operational Activity Bar displayed. The main display is one of many screens of an Internet Browser. Therefore, the various terms that are in part in the German language have no relation to the present invention proper. The Activity Bar is, as preferred by the present inventors, shown at the left edge of the screen, which position is however no pertinent restriction. The actual display shows that user 1 (the driver's display) actually runs the **NAV**igation application. Furthermore, the other two users are running a CAR PC application as indicated by **MI.** The display may be supplemented by a specific element that indicates which display the user is actually looking at. Such could be indicated outside the actual screen, or be blended locally into the screen, such as by way of a highlight of the Activity Bar field in question. Of course, the number of user stations could be greater than three.

Clearly, the Activity Bar allows the user person to see what applications and/or programs the other users are running, as well as what the operational status of the person self is, whilst obstructing only a minimal and generally secondary part of the screen. In certain embodiments, the Activity Bar could even be represented in a transparent manner.

Figure 3 illustrates a second exemplary display image that features an operational activity bar displayed. Here, the actual selection of the Activity Bar has been made from the second display (left hand rear display). As in Figure 2, the front user is running the Navigation application. The current selector has the Master Rights (MC) for the MC5400 subsystem.

The third user (right hand rear display) is in standby state (STB). The background image is one of the conventional starting images of the overall multimedia application.

Next to the character-content of the Activity Bar, the following background colours for the Activity Bar have been selected in the preferred embodiment to indicate various activity states, as follows:

| | |
|---|---|
| Green: | Selection for Display 1 in Master Mode |
| Dark Green: | Selection for Display 1 in Slave Mode |
| Yellow: | Selection for Display 2 in Master Mode |
| Dark Yellow: | Selection for Display 2 in Slave Mode |
| Blue: | Selection for Display 3 in Master Mode |
| Dark Blue: | Selection for Display 3 in Slave Mode |
| Grey: | No selection active for the display in question. |

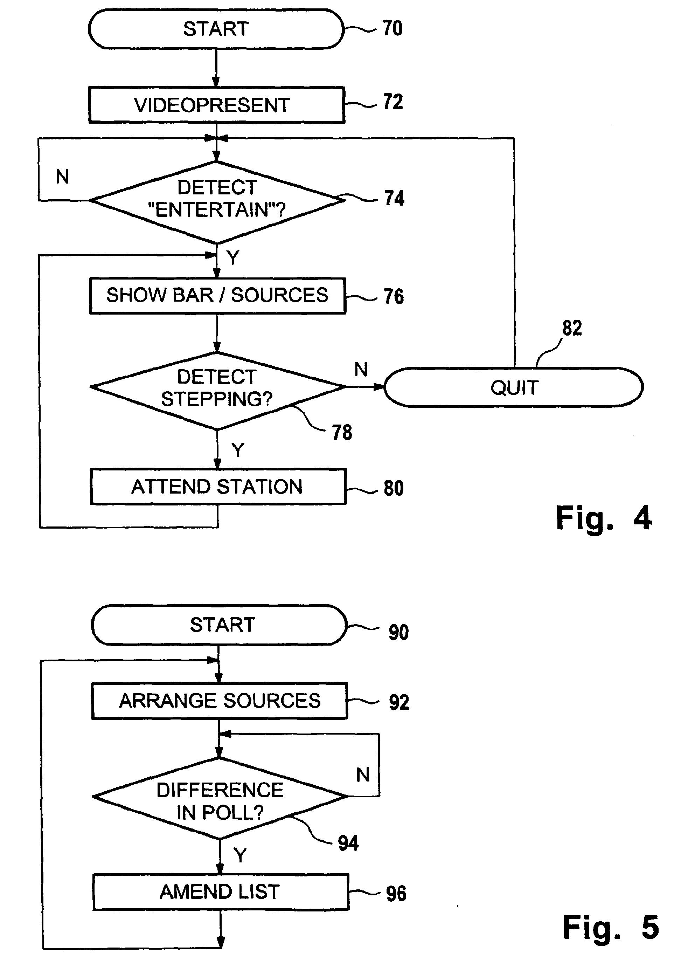

Figure 4 illustrates a flow chart of the operation regarding the Activity Bars illustrated in Figures 2 and 3. In block 70, the system is started, such as through closing the main contact switch of the motor vehicle, whereupon the necessary hardware and software facilities are assigned to the program. In block 72, the current activity states are ascertained, and the display content for the Activity Bar is prepared. In block 74, the actuating of the ENTERTAIN key is detected. Absent such actuation, the block 74 operates as a waiting loop. Upon receiving an ENTERTAIN signalization, in block 76, the Activity Bar is blended into the image. In principle, any of the keys in this paragraph could be activating. In block 78, a stepping actuation (UP or DOWN) by the user is detected. If positive, in block 80, the display for the station in question is updated, and the system goes again to block 78. If negative in block 78, or if an OK signal is entered, the system goes to block 82 QUIT, whereupon the display of the Activity Bar is terminated and the system goes again to block 74, unless another display station will activate or is still activating the Activity Bar.

Figure 5 illustrates another flow chart of the operation regarding the Activity Bars of Figures 2 and 3. In block 90, the system is started. In block 92, the currently active video sources are arranged in a list for the Activity Bar. In block 94, the various video sources known to the system are polled for their availability, and any discrepancy with respect to the list of Active Video sources kept in the system is noted. In block 96, the list is updated/amended, and the system reverts to block 92. Effectively, the flow chart of Figure 5 could therefore represent part of block 72 in Figure 4.

Now, from the detailed disclosure of the preferred embodiments here above, persons skilled in the art will recognize numerous changes and amendments thereof. Therefore, this disclosure, taken in combination with the appended drawings, is to be considered illustrative and not restrictive to the present invention, of which the due scope should be ascertained from the recitation in the Claims hereinafter.

## Claims

1. An interactive multimedia system for multi-user application in a motor vehicle featuring a multimedia center subsystem (20) that accommodates processing means (100) for running various computer-oriented processing applications and that is arranged for interfacing to
(a) receiving means (22-32) that are arranged for receiving various image information and/or other signal streams;
(b) distributed visual representation facilities (42, 46, 58) that are arranged for representing respective personal images on the basis of said signal streams and/or information received from one or more other sources by said multimedia center, through providing of a video multiplexing facility (106);
said system being **characterized by** comprising visual imaging means for on at least a first such visual representation facility displaying a signalization item for indicating with respect to at least one other such visual representation facility than said first one identifying the source and/or application in question that is active with respect to such other visual representation facility, wherein said subsystem is arranged for allowing user-selection among a set of said sources/applications for activation said first visual representation facility, whilst substantially continuing any actual and functional displaying regardless of the displaying of said signalization item.

2. A system as claimed in **claim 1,** being **characterized in that** the number of said visual representation facilities (42, 46, 58) is higher than the number of image output channels from said processing means (100).

3. A system as claimed in **claim 1,** being **characterized in that** said system is arranged for displaying on at least one of said visual representation facilities a respective said signalization item with respect to all of said other visual representation facilities.

4. A system as claimed in **claim 1,** being **characterized in that** said system is arranged for displaying on at least one of said visual representation facilities a respective said signalization item with respect to all of said visual representation facilities.

5. A system as claimed in claim 1, being **characterized in that** said system is arranged for displaying on various ones of said visual representation facilities a respective said signalization item with respect to all of said other visual representation facilities.

6. A system as claimed in claim 1, being **characterized in that** said system is arranged for displaying on various ones of said visual representation facilities a respective said signalization item with respect to all of said visual representation facilities.

7. A system as claimed in **claim 6,** being **characterized in that** said signalization items have identical configurations for all of said visual representation facilities, on which they are actually being displayed.

8. A system as claimed in **claim 7,** being **characterized in that** said configuration is formed as a vertical or horizontal display bar.

9. A system as claimed in **claim 8,** being **characterized in that** all currently active sources are arranged in a virtual steppable chain.

10. A system as claimed in **claim 9,** being **characterized in that** said chain is a closed chain that is bidirectionally steppable.

11. A multimedia center subsystem (20) being arranged for use in an interactive multimedia system as claimed in Claim 1.

12. A motor vehicle (18) being provided with an interactive multimedia system as claimed in claim 1, or with a multimedia center subsystem (20) as claimed in claim 11.

## Patentansprüche

1. Interaktives Multimediasystem für Mehrbenutzeranwendung in einem Kraftfahrzeug, das ein Multimediazentralen-Subsystem (20) aufweist, in dem Verarbeitungsmittel (100) zum Ausführen verschiedener computerorientierter Verarbeitungsanwendungen untergebracht sind und das für eine Schnittstelle zu folgendem ausgelegt ist:
(a) Empfangsmittel (22-32), die zum Empfangen verschiedener Bildinformationen und/oder anderer Signalströme ausgelegt sind;
(b) verteilte Einrichtungen der visuellen Repräsentation (42, 46, 58), die zum Repräsentieren jeweiliger persönlicher Bilder auf der Basis der Signalströme und/oder Informationen, die aus einer oder mehreren anderen Quellen durch die Multimediazentrale empfangen werden, durch Bereitstellung einer Videomultiplexeinrichtung (106) ausgelegt sind;
wobei das System **dadurch gekennzeichnet ist, daß** es folgendes umfaßt: Mittel der visuellen Abbildung zum Anzeigen eines Signalisierungselements auf mindestens einer ersten solchen Einrichtung der visuellen Repräsentation zur Anzeige in bezug auf mindestens eine andere solche Einrichtung der visuellen Repräsentation als die erste, wodurch die fragliche Quelle und/oder Anwendung identifiziert wird, die in bezug auf eine solche andere Einrichtung der visuellen Repräsentation aktiv ist, wobei das Subsystem dafür ausgelegt ist, eine Benutzerauswahl aus einer Menge der Quellen/Anwendungen zur Aktivierung der ersten Einrichtung der visuellen Repräsentation zu ermöglichen, während ein etwaiges tatsächliches und funktionales Anzeigen ungeachtet des Anzeigens des Signalisierungselements im wesentlichen fortgesetzt wird.

2. System nach Anspruch 1, **dadurch gekennzeichnet, daß** die Anzahl der Einrichtungen der visuellen Repräsentation (42, 46, 58) größer als die Anzahl der Bildausgangskanäle der Verarbeitungsmittel (100) ist.

3. System nach Anspruch 1, **dadurch gekennzeichnet, daß** das System dafür ausgelegt ist, auf mindestens einer der Einrichtungen der visuellen Repräsentation ein jeweiliges solches Signalisierungselement in bezug auf alle der anderen Einrichtungen der visuellen Repräsentation anzuzeigen.

4. System nach Anspruch 1, **dadurch gekennzeichnet, daß** das System dafür ausgelegt ist, auf mindestens einer der Einrichtungen der visuellen Repräsentation ein jeweiliges solches Signalisierungselement in bezug auf alle der Einrichtungen der visuellen Repräsentation anzuzeigen.

5. System nach Anspruch 1, **dadurch gekennzeichnet, daß** das System dafür ausgelegt ist, auf verschiedenen der Einrichtungen der visuellen Repräsentation ein jeweiliges solches Signalisierungselement in bezug auf alle der anderen Einrichtungen der visuellen Repräsentation anzuzeigen.

6. System nach Anspruch 1, **dadurch gekennzeichnet, daß** das System dafür ausgelegt ist, auf verschiedenen der Einrichtungen der visuellen Repräsentation ein jeweiliges solches Signalisierungselement in bezug auf alle der Einrichtungen der visuellen Repräsentation anzuzeigen.

7. System nach Anspruch 6, **dadurch gekennzeichnet, daß** die Signalisierungselemente für alle der Einrichtungen der visuellen Repräsentation, auf denen sie tatsächlich angezeigt werden, identische Konfigurationen aufweisen.

8. System nach Anspruch 7, **dadurch gekennzeichnet, daß** die Konfiguration als ein vertikaler oder horizontaler Anzeigebalken gebildet wird.

9. System nach Anspruch 8, **dadurch gekennzeichnet, daß** alle zur Zeit aktiven Quellen in einer virtuellen durchschreitbaren Kette angeordnet sind.

10. System nach Anspruch 9, **dadurch gekennzeichnet, daß** die Kette eine geschlossene Kette ist, die bidirektional durchschreitbar ist.

11. Multimediazentralen-Subsystem (20), das für die Verwendung in einem interaktiven Multimediasystem nach Anspruch 1 ausgelegt ist.

12. Kraftfahrzeug (18), das mit einem interaktiven Multimediasystem nach Anspruch 1 oder mit einem Multimediazentralen-Subsystem (20) nach Anspruch 11 ausgestattet ist.

## Revendications

1. Système multimédia interactif pour une application multi-utilisateur dans un véhicule à moteur équipé d'un sous-système central multimédia (20), qui comporte des moyens de traitement (100) pour exécuter diverses applications de traitement orientées machine et qui est configuré pour réaliser l'interface avec
(a) des moyens de réception (22 à 32) qui sont configurés pour recevoir diverses informations d'image et/ou d'autres flux de signaux;
(b) des installations de représentation visuelle réparties (42, 46, 58) qui sont configurées pour représenter des images personnelles respectives sur la base desdits flux de signaux et/ou desdites informations reçues d'une ou plusieurs autres sources par ledit central multimédia, grâce à la fourniture d'une installation de multiplexage vidéo (106);
ledit système étant **caractérisé en ce qu'**il comprend des moyens d'imagerie visuelle pour afficher, sur au moins une première installation de représentation visuelle de cette sorte, un élément de signalisation destiné à fournir une indication par rapport à au moins une telle autre installation de représentation visuelle que ladite première, identifiant la source et/ou l'application en question qui est active par rapport à cette autre installation de représentation visuelle, dans lequel ledit sous-système est configuré pour permettre une sélection par l'utilisateur parmi un ensemble desdites sources/applications pour l'activation de ladite première installation de représentation visuelle, tout en poursuivant substantiellement tout affichage réel et fonctionnel indépendamment de l'affichage dudit élément de signalisation.

2. Système selon la revendication 1, **caractérisé en ce que** le nombre desdites installations de représentation visuelle (42, 46, 58) est supérieur au nombre de canaux de sortie d'image desdits moyens de traitement (100).

3. Système selon la revendication 1, **caractérisé en ce que** ledit système est configuré pour afficher sur au moins l'une desdites installations de représentation visuelle un dit élément de signalisation respectif par rapport à toutes lesdites autres installations de représentation visuelle.

4. Système selon la revendication 1, **caractérisé en ce que** ledit système est configuré pour afficher sur au moins l'une desdites installations de représentation visuelle un dit élément de signalisation respectif par rapport à toutes lesdites installations de représentation visuelle.

5. Système selon la revendication 1, **caractérisé en ce que** ledit système est configuré pour afficher sur diverses installations parmi lesdites installations de représentation visuelle un dit élément de signalisation respectif par rapport à toutes lesdites autres installations de représentation visuelle.

6. Système selon la revendication 1, **caractérisé en ce que** ledit système est configuré pour afficher sur diverses installations parmi lesdites installations de représentation visuelle un dit élément de signalisation respectif par rapport à toutes lesdites installations de représentation visuelle.

7. Système selon la revendication 6, **caractérisé en ce que** lesdits éléments de signalisation présentent des configurations identiques pour toutes lesdites installations de représentation visuelle sur lesquelles ils sont réellement affichés.

8. Système selon la revendication 7, **caractérisé en ce que** ladite configuration est formée par une barre d'affichage verticale ou horizontale.

9. Système selon la revendication 8, **caractérisé en ce que** toutes les sources actuellement actives sont agencées en une chaîne virtuelle pouvant être parcourue pas à pas.

10. Système selon la revendication 9, **caractérisé en ce que** ladite chaîne est une chaîne fermée pouvant être parcourue pas à pas de manière bidirectionnelle.

11. Sous-système central multimédia (20) configuré pour une utilisation dans un système multimédia interactif selon la revendication 1.

12. Véhicule à moteur (18) muni d'un système multimédia interactif selon la revendication 1, ou d'un sous-système central multimédia (20) selon la revendication 11.
